# EUROPEAN PATENT APPLICATION

(11) **EP 1 738 974 A2**
(43) Date of publication of application: **03.01.2007**
(21) Application number: 06013285.9
(22) Date of filing: 27.06.2006
(51) Int. Cl.: B60R 22/00

(54) **Occupant protection system, automobile, and occupant protection method**

(30) Priority: 28.06.2005 JP 2005187928
(71) Applicant: NISSAN MOTOR CO., LTD., Yokohama-shi Kanagawa-ken (JP)
(72) Inventor: Oota, Kouichi, Yamato-shi Kanagawa-ken (JP); Tobata, Hideo, Yokosuka-shi Kanagawa-ken (JP)
(74) Representative: Hager, Thomas Johannes

(57) **Abstract**

An occupant protection system for protecting an occupant from side collision of a vehicle (20, 200) has a restraint member (5, 103) provided between the occupant and a side face of the vehicle (20, 200), and restraining a shoulder and a thigh of the occupant toward the inside of the vehicle (20, 200) when the collision to the side face occurs. Further, the system has a switching apparatus reversibly switching between a normal state in which the restraint member (5, 103) is accommodated at a place where the restraint member (5, 103) does not affect the occupant getting on and off the vehicle (20, 200) and an collision preparation state where the restraint member (5, 103) is positioned between the side face of the vehicle (20, 200) and the shoulder and the thigh of the occupant.

## Description

### BACKGROUND OF THE INVENTION

### 1. Field of the Invention

The present invention relates to an occupant protection system which protects an occupant from side collision of a vehicle, a vehicle provided with the same, and a method of protecting an occupant.

### 2. Description of the Related Art

Use of an airbag which deploys from the back or side of the seat and an airbag which deploys from a roof side rail or door trim has been known as a conventional method of protecting an occupant at side collision of a vehicle. In such a method using an airbag, upon detection of the collision of the vehicle, the airbag is instantly filled with gas. The airbag having deployed is then slowly deflated as releasing internal gas, thus absorbing collision energy between the occupant and a face which the occupant strikes (see Japanese Patent Laid-open Publication No. 7-223505).

### SUMMARY OF THE INVENTION

However, because of the structure of the vehicle, space on the side of the seat is more limited than space in front of the seat. Accordingly, in terms of stroke of an airbag when the collision energy is absorbed by deflation of the airbag, the stroke of a side airbag provided on the side of the seat is inevitably designed to be smaller than that of a front airbag provided in front of the seat. Moreover, the side airbag needs to deploy for less time, and the amount of collision energy absorbed is accordingly limited. Furthermore, it is diffcult for the side airbag to provide higher occupant restraint force in the vehicle lateral direction because of the structure thereof. In the conventional arts, therefore, there is room for improvement in the performance of protecting an occupant from side collision of a vehicle.

The present invention was made in the light of those problems in the conventional arts, and an object of the present invention is to provide an occupant protection system with improved performance in protecting an occupant from side collision of the vehicle, a vehicle including the same, and an occupant protection method.

The first aspect of the present invention provides an occupant protection system for protecting an occupant from side collision of a vehicle comprising: a restraint member provided between the occupant and a side face of the vehicle, and restraining a shoulder and a thigh of the occupant toward the inside of the vehicle when the collision to the side face occurs; and a switching apparatus reversibly switching between a normal state in which the restraint member is accommodated at a place where the restraint member does not affect the occupant getting on and off the vehicle and an collision preparation state where the restraint member is positioned between the side face of the vehicle and the shoulder and the thigh of the occupant.

The second aspect of the present invention provides an occupant protection method for protecting an occupant from side collision of a vehicle comprising: providing a restraint member between the occupant and a side face of the vehicle, the restraint member restraining a shoulder and a thigh of the occupant toward the inside of the vehicle when the collision to the side face occurs; and reversibly switching between a normal state in which the restraint member is accommodated at a place where the restraint member does not affect the occupant getting on and off the vehicle and an collision preparation state where the restraint member is positioned between the side face of the vehicle and the shoulder and the thigh of the occupant.

### BRIEF DESCRIPTION OF THE DRAWINGS

The invention will now be described with reference to the accompanying drawings wherein;
FIG. 1A is a schematic view showing a configuration of an occupant protection system according to a first embodiment of the present invention;
FIG. 1B is a perspective view showing a vehicle provided with the occupant protection system according to the first embodiment;
FIG. 2A is a perspective view showing a belt cover;
FIG. 2B is a perspective view showing the belt cover with a belt inserted therein;
FIGS. 3A and 3B are views showing examples of a structure coupling the belt cover and a belt return elastic body;
FIG. 4 is a flowchart showing processing of a side collision sensor unit when possibility of side collision is detected;
FIG. 5 is a flowchart showing processing of the side collision sensor unit when occurrence of side collision is detected;
FIGS. 6A to 6C are perspective views for explaining an action of the occupant protection system according to the first embodiment;
FIGS. 7A to 7C are side views showing states of the occupant protection system according to the first embodiment before and after activation while an occupant is sitting;
FIGS. 8A to 8C are front views showing the states of the occupant protection system according to the first embodiment before and after activation while the occupant is sitting;
FIGS. 9A to 9D are perspective views showing other configuration examples of the belt return elastic body;
FIG 10A is a front view showing a configuration of an airbag module protecting a hip of the occupant;
FIG 10B is a front view showing the airbag module having deployed;
FIG. 11A is a schematic view showing a configuration of an occupant protection system according to a second embodiment of the present invention;
FIG. 11B is a perspective view showing a vehicle provided with the occupant protection system according to the second embodiment;
FIG. 12 is a schematic view showing a configuration of an airbag unit;
FIGS. 13A to 13C are cross-sectional views showing an action of the airbag unit; and
FIGS. 14A to 14C are perspective views for explaining an action of the occupant protection system according to the second embodiment.

### DETAILED DESCRIPTION OF THE PREFERRED EMBODIMENTS

Hereinafter, a description is given of embodiments of the present invention with reference to the drawings.

### (First Embodiment)

### (Configuration)

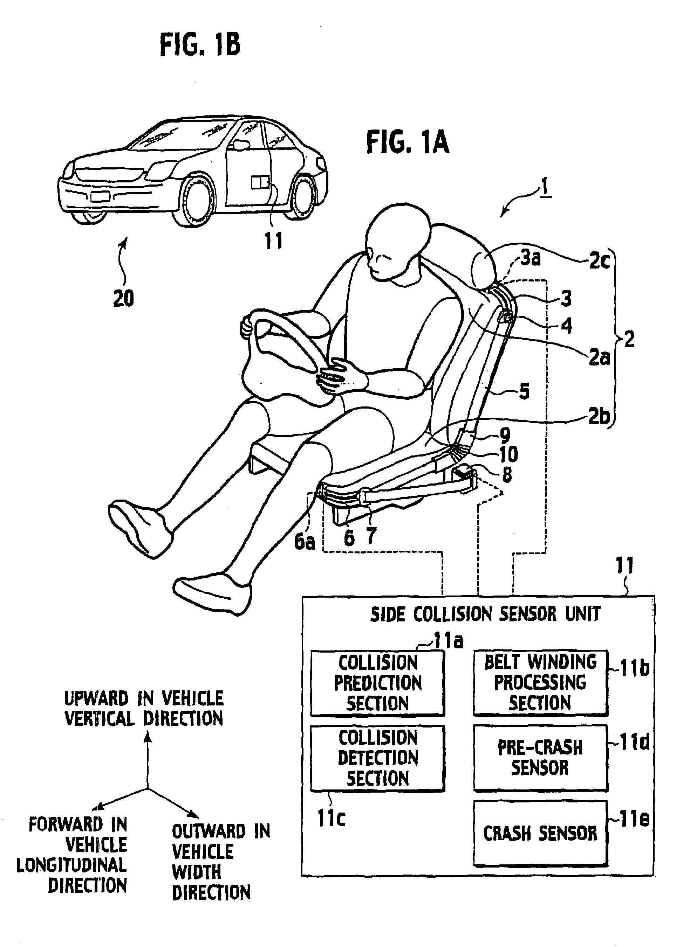

FIGS. 1A and 1B show a configuration of an occupant protection system 1 according to a first embodiment of the present invention. The occupant protection system 1 of the first embodiment is provided for side part of a seat 2, on which an occupant sits, in a side of the vehicle (hereinafter, referred to as an "outside part"). The occupant protection system 1 includes a shoulder anchor rail 3, a shoulder anchor 4, a belt 5, a through anchor rail 6, a through anchor 7, a retractor 8, a belt cover 9, a belt return elastic body 10, and a side collision sensor unit 11. The shoulder anchor rail 3 is provided at a shoulder of a seat back 2a in the outside part of the seat 2 and slidably holds the shoulder anchor 4. The shoulder anchor 4 is slidably held by the shoulder anchor rail 3 and supports an end of the belt 5. The belt 5 has one end supported by the shoulder anchor 4 and the other end wound by the retractor 8. The through anchor rail 6 is provided at the front end of a seat cushion 2b in the outside part of the seat 2 and slidably holds the through anchor 7. The through anchor 7 is slidably held by the through anchor rail 6 and includes an insertion hole through which the belt 5 is inserted. The retractor 8 winds the other end of the belt 5. The belt cover 9 allows the belt 5 to be inserted therethrough and is coupled to an end of the belt return elastic body 10. The belt return elastic body 10 is composed of a member with elasticity. The belt return elastic body 10 retracts the belt cover 9 with the elasticity to the vicinity of a portion of the outside part of the seat 2 where the seat back 2a and seat cushion 2b are joined with each other. As shown in FIG. 1B, the side collision sensor unit 11 is provided within a door closer to the outside part of the seat 2. The side collision sensor unit 11 detects collision from the side of a vehicle 20 and makes a control according to the possibility of side collision.

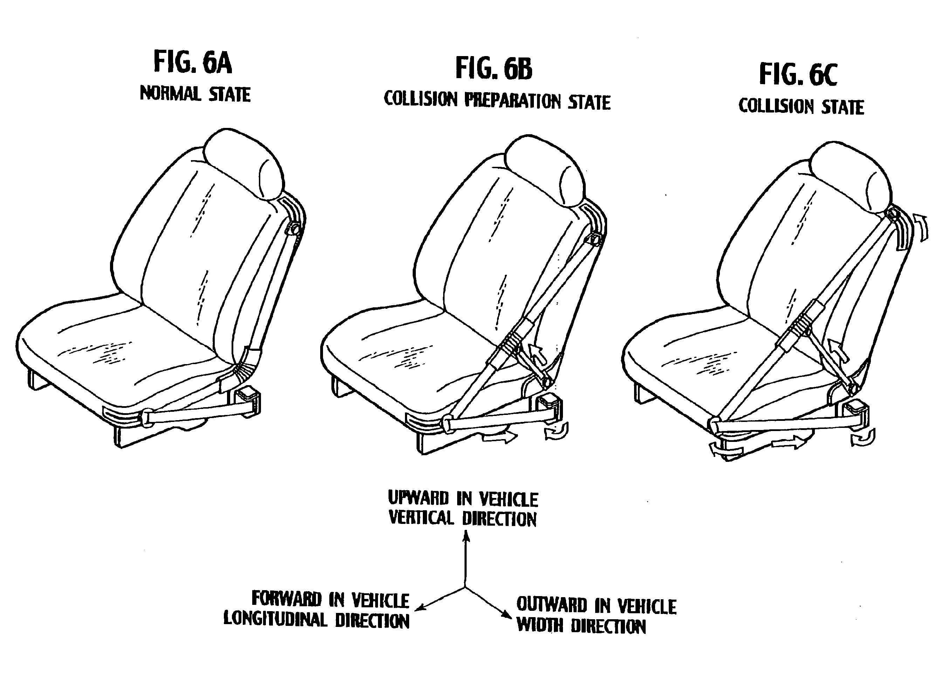

The shoulder anchor rail 3 is a rail formed into an L-shape in the shoulder of the seat back 2a of the seat 2 along a side face of the seat back 2a and an upper face on which a headrest 2c stands. The shoulder anchor rail 3 slidably holds the shoulder anchor 4 (see FIG. 6A). In the shoulder anchor rail 3, an actuator 3a is provided. The actuator 3a retracts the shoulder anchor 4 along the rail 3 toward the inside of the vehicle, that is, in such a direction that the shoulder anchor approaches the headrest 2c. The shoulder anchor rail 3 activates the actuator 3a and retracts the shoulder anchor 4 toward the inside of the vehicle upon receiving from the side collision sensor unit 11 a collision signal indicating occurrence of side collision. The actuator 3a can be an actuator activated by explosive detonation or a motor or the like. When the actuator 3a is an actuator activated by explosive detonation, the actuator 3a can be operated for a very short time. When the actuator 3a is an actuator activated by a motor, the actuator 3a can be reversibly operated. Accordingly, the actuator 3a can be operated in advance before collision occurs, and it is possible to improve the performance in initially restraining the occupant

The shoulder anchor rail 3 extends from a position near an outer end of the headrest 2c on the upper face of the seat back 2a, that is, such a position that the shoulder anchor 4 retracted by the actuator 3a does not interfere with the headrest 2c, to a shoulder of the seat back 2a (a boundary of the upper and side faces), The shoulder anchor rail 3 further extends downward on the side face of the seat back 2a by a length equal to the part of the shoulder anchor rail 3 extending on the upper face of the seat back 2a.

The shoulder anchor 4 is fixed to a lower end of the shoulder anchor rail 3 on the side face of the seat back 2a while supporting an end of the belt 5 except when collision occurs. When collision occurs, the shoulder anchor 4 is retracted by the actuator 3a to a position closest to the center of the vehicle along the rail 3 on the upper face of the seat back 2a (see FIG. 6C).

The through anchor rail 6 is a rail formed into an L-shape in front end of the seat cushion 2b of the seat 2 along side and front faces thereof. The through anchor rail 6 slidably holds the through anchor 7 (see FIG. 6A). In the through anchor rail 6, an actuator 6a is provided. The actuator 6a retracts the through anchor 7 toward the inside of the vehicle along the rail 6. This actuator 6a, similar to the actuator 3a in the shoulder anchor rail 3, can be an actuator activated by explosive detonation or a motor or the like. The through anchor rail 6 activates the actuator 6a to retract the through anchor 7 toward the inside of the vehicle upon receiving the collision signal indicating occurrence of side collision from the side collision sensor unit 11.

Moreover, the through anchor rail 6 extends from a position slightly inside the outer end of the front face of the seat cushion 2b to a corner (a boundary between the front and side faces) of the seat cushion 2b. The through anchor rail 6 further extends rearward on the side face of the seat cushion 2b by a distance equal to the distance of the part of the through anchor rail 6 extending on the front face.

Note that specific length, position of each end, and the like of the shoulder anchor rail 3 and through anchor rail 6 are chosen so as to meet design conditions proper for the action of restraining the occupant toward the inside of the vehicle from the viewpoint of retracting amounts and speed of the shoulder and through anchors 4 and 7 when the actuator 3a and 6a are activated upon occurrence of collision or preventing the belt 5 from being wound around the neck of the occupant.

The through anchor 7 is fixed to the rear end of the through anchor rail 6 on the side face of the seat cushion 2b except when collision occurs. When collision occurs, the through anchor 7 is retracted to a position closest to the center of the vehicle on the front face of the seat cushion 2b along the rail 6 by the actuator 6a of the through anchor rail 6 (see FIG. 6C).

The retractor 8 supports the end of the belt 5 which is different from the end supported by the shoulder anchor 4 and includes a function to wind the belt 5. Except when collision occurs, the retractor 8 winds the belt 5 so that the belt cover 9 is retracted at a normal position by the belt return elastic body 10. When the possibility of side collision is increased, the retractor 8 winds the belt 5 at a winding speed according to the possibility of side collision to increase tension of the belt 5. When side collision is avoided and the possibility of side collision is reduced, the retractor 8 releases the wound belt 5 and returns to a winding state which allows the belt cover 9 to be located at the normal position.

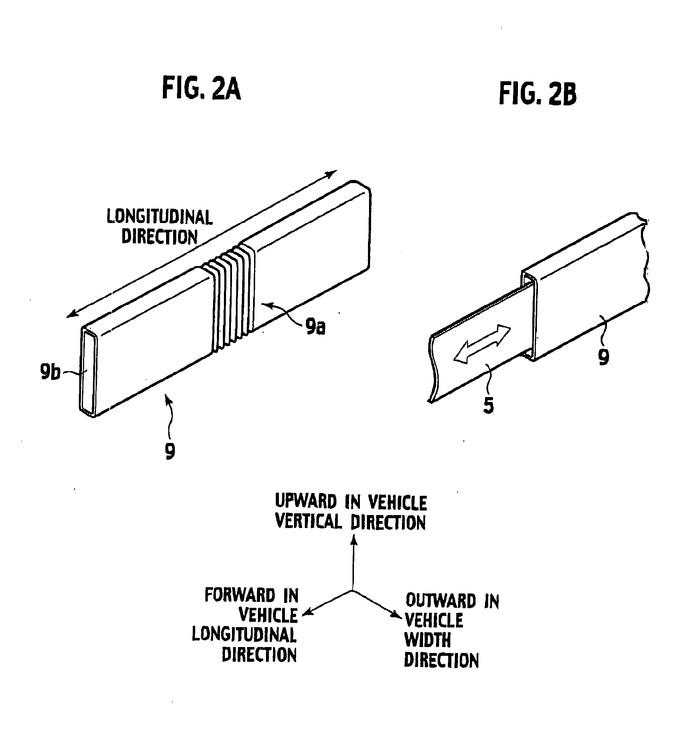

The belt cover 9 is composed of a member slightly thicker and wider than the belt 5. As shown in FIG. 2A, the belt cover 9 includes an accordion structure 9a in longitudinally center. The belt cover 9 includes the insertion hole 9b allowing the belt 5 to be longitudinally inserted therethrough. As shown in FIG. 2B, the belt 5 is slidably inserted through the insertion hole 9b. The belt cover 9 is coupled with an end of the belt return elastic body 10. When retraction force due to the elasticity of the belt return elastic body 10 acts, the belt cover 9 is bent at the accordion structure 9a into an substantially L-shape in a direction along the side face of the seat 2. In order to absorb shock generated between the occupant and the belt 5, a door, or the like, it is desirable that this belt cover 9 is composed of a member with elasticity.

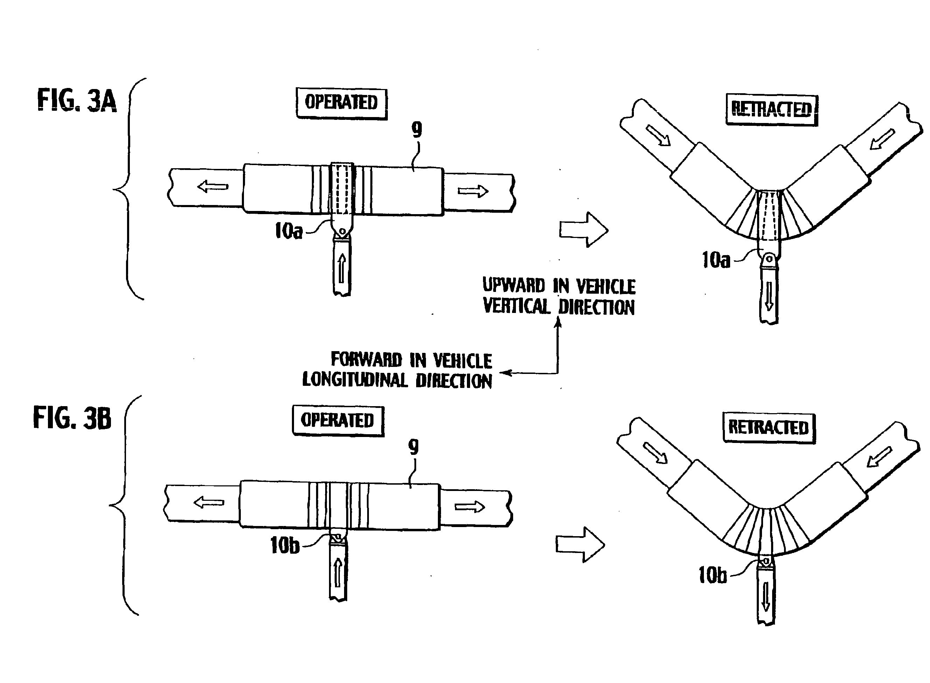

FIGS. 3A and 3B show examples of a structure coupling the belt cover 9 and the belt return elastic body 10. FIG. 3A shows an example of the structure coupling the belt cover 9 and an end of the belt return elastic body 10 through a holding member 10a such as a belt, and FIG. 3B shows an example of the structure coupling the belt cover 9 and the belt return elastic body 10 through a connection bracket 10b.

In FIGS. 3A and 3B, the accordion structure 9a is formed in longitudinally center of the belt cover 9. When the belt return elastic body 10 is retracted to the normal position, this accordion structure 9a allows the belt cover 9 to be bent into a substantially L-shape and fit to the outside part of the seat 2. Moreover, when the seat back 2a is reclined, the belt cover 9 follows the reclined seat back 2a into a shape along the outside part of the seat 2. As described above, the belt cover 9 includes a function as a member coupling the belt 5 and belt return elastic body 10, an absorber member absorbing shock against the occupant, and a housing member accommodating the belt 5 onto the outside face of the seat 2. The structure coupling the belt cover 9 and the belt return elastic body 10 is not limited to the aforementioned form, and the belt cover 9 and the belt return elastic body 10 may be directly connected.

The belt return elastic body 10 is composed of a member with elasticity and is contracted to maintain the belt cover 9 retracted at the normal position on the outside part of the seat 2 unless side collision occurs (normal state). When the possibility of side collision is increased and the retractor 8 winds the belt 5 to increase the tension thereof, the belt return elastic body 10 is elongated because of the elasticity thereof to allow the belt cover 9 to be located near an elbow of the occupant sitting (substantially near the center of the belt 5 connecting the shoulder anchor 4 and the through anchor 7).

The side collision sensor unit 11 detects the possibility of side collision on the side of the vehicle and occurrence of side collision and makes a control of the occupant protection system 1 according thereto. The side collision sensor unit 11 includes a collision prediction section 11a, a belt winding processing section 11b, a collision detection section 11c, a pre-crash sensor 11d, and a crash sensor 11e (see FIG. 1A).

The collision prediction section 11a detects an object approaching from the side of the vehicle with a pre-crash sensor 11d. The pre-crash sensor 11d includes a radar with laser beams or millimeter waves. The collision prediction section 11a judges the possibility of side collision based on the distance and relative speed to the approaching object and sets the level of the possibility of side collision. For example, in the case of detecting an object approaching from the side of the vehicle, when judging the distance to be not less than a predetermined distance or judging the relative speed to be not more than a predetermined speed, the collision prediction section 11a sets the level of the possibility of side collision to a low level (level L1). When judging the distance to be less than a predetermined distance or judging the relative speed to be more than a predetermined speed, the collision prediction section 11a sets the level of the possibility of side collision to a high level (level L2). When the possibility of side collision does not correspond to the levels L1 or L2, such as when no object approaching from the side of the vehicle is detected, the level of the possibility of side collision is set to a level L0. These levels may be more separated corresponding to the possibility of side collision. The collision prediction section 11 a outputs a level notification signal indicating the level of the possibility of side collision to the belt winding processing section 11b.

When the level of the possibility of side collision is set to the level L1 by the collision prediction section 11a, the belt winding processing section 11b outputs a control signal to the retractor 8 to cause the retractor 8 to wind the belt 5 at low speed for a predetermined period of time. When the level of the possibility of side collision is set to the level L2 by the collision prediction section 11a, the belt winding processing section 11b outputs a control signal to the retractor 8 to cause the retractor 8 to wind the belt 5 at high speed for a predetermined period of time. Changing the speed of winding the belt 5 according to the level of the possibility of side collision in such a manner allows side collision which can occur thereafter to be addressed at a proper speed. When side collision is detected by the collision detection section 11c, the belt winding processing section 11b outputs an collision signal indicating occurrence of side collision to the retractor 8, shoulder anchor rail 3, and through anchor rail 6.

The collision detection section 11c detects occurrence of collision on the side face of the vehicle by the crash sensor 11e including an acceleration sensor.

With such a configuration, the side collision sensor unit 11 performs control processing based on the following flowcharts.

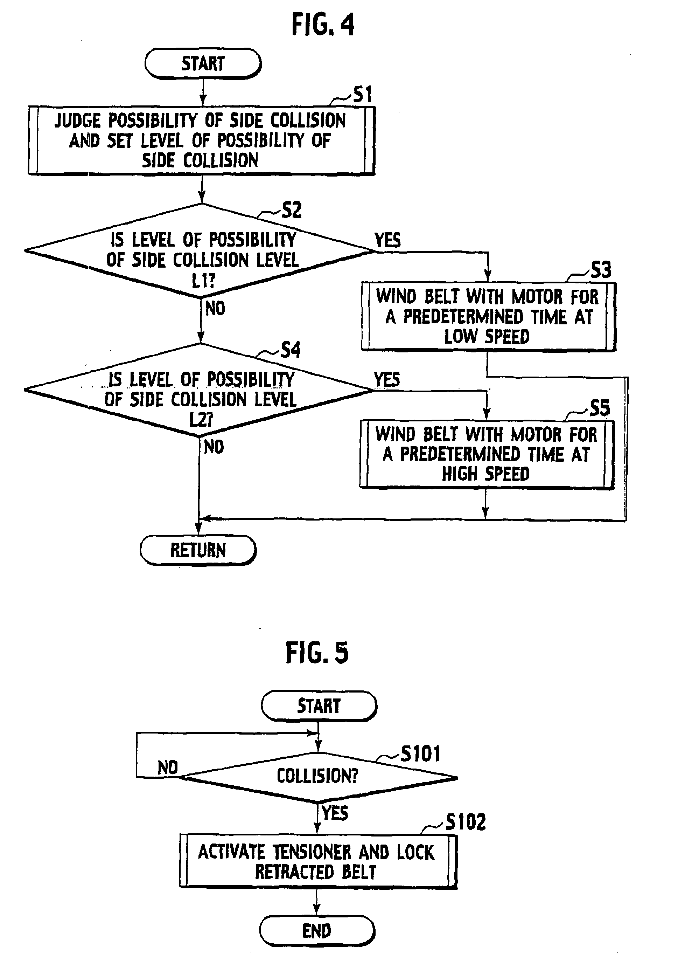

FIGS. 4 and 5 are flowcharts showing the control processing of the side collision sensor unit 11. FIG. 4 shows processing when the possibility of side collision is detected, and FIG. 5 shows processing when occurrence of side collision is detected. The side collision sensor unit 11 repeatedly executes the processing shown in FIGS. 4 and 5 while an ignition is on.

First, a description is given of the flowchart shown in FIG. 4. In FIG. 4, after the processing is started, the side collision sensor unit 11 judges the possibility of side collision with the collision prediction section 11 a based on the distance and relative speed to the approaching object in the results of detection by the pre-crash sensor 11d and sets the level of the possibility of side collision (step S1).

Subsequently, the side collision sensor unit 11 judges whether the level of the possibility of side collision set by the collision prediction section 11a is the level L1 (step S2). When the level of the possibility is judged to be the level L1, the side collision sensor unit 11 outputs the control signal to the retractor 8 with the belt winding processing section 11b to cause the retractor 8 to wind the belt 5 at low speed for the predetermined period of time (step S3).

On the other hand, in step S2, when the level of the possibility of side collision is judged not to be the level L1, the side collision sensor unit 11 judges with the collision prediction section 11a whether the level of the possibility of side collision is the level L2 (step S4), When the level of the possibility is judged to be the level L2, the side collision sensor unit 11 outputs the control signal to the retractor 8 with the belt winding processing section 11b to cause the retractor 8 to wind the belt 5 at high speed for the predetermined period of time (step S5).

When the level of the possibility of side collision is judged not to be the level L2 in the step S4 and after the steps S3 and S5, the side collision sensor unit 11 proceeds to the process of the step S1.

When the level of the possibility of side collision continues to be lower than the levels L1 and L2 for a certain period of time with the belt 5 being wound in the processes of the steps S3 and S5, the belt 5 is released and returned to be accommodated on the outside face of the seat 2.

Next, a description is given of the flowchart shown in FIG. 5. In FIG. 5, after the processing is started, the side collision sensor unit 11 judges with the collision detection section 11c based on the results of detection by the crash sensor 11e whether side collision has occurred (step S101). When judging that the side collision has occurred, the side collision sensor unit 11 outputs the collision signal indicating the occurrence of side collision and instructs the retractor 8 to wind the belt 5 to activate the tensioner function and lock the retracted belt 5 (a restraint state). Moreover, the side collision sensor unit 11 instructs the actuators 3a and 6a to retract the shoulder and through anchors 4 and 7 toward the inside of the vehicle, respectively (step S 102).

On the other hand, when judging that no side collision has occurred in the step S101 and after the step S102, the side collision sensor unit 11 repeats the process of the step S101.

### (Action)

Next, a description is given of an action of the occupant protection system 1.

FIGS. 6A to 6C schematically show the action of the occupant protection system 1. Before the possibility of side collision occurs, as shown in FIG. 6A, in the occupant protection system 1, the shoulder anchor 4 is fixed to the lower end of the shoulder anchor rail 3 on the side face of the seat back 2a, and the through anchor 7 is fixed to the rear end of the through anchor rail 6 on the side face of the seat cushion 2b. The retractor 8 retracts the belt 5 so that the belt cover 9 is located at the normal position. This state is referred to as a "normal state" of the occupant protection system 1.

When the possibility of side collision becomes the level L1 or L2, as shown in FIG. 6B, the retractor 8 winds the belt 5 to raise the belt cover 9 from the normal position. The belt cover 9 moves close to an elbow of the occupant. This state is referred to as a "collision preparation state" of the occupant protection system 1.

Thereafter, when the possibility of side collision is avoided, the retractor 8 releases the wound belt 5 to return the belt cover 9 to the normal position. In other words, the occupant protection system 1 is once brought into the collision preparation state and then reversibility into the normal state.

On the other hand, when side collision occurs, as shown in FIG. 6C, the actuators 3a and 6a of the shoulder and through anchor rails 3 and 6 retract the shoulder and through anchor 4 and 7 toward the inside of the vehicle, respectively. The belt 5 with higher tension than that of the collision preparation state restrains the occupant toward the inside of the vehicle. This state is a "collision state" of the occupant protection system 1.

### (Function)

Next, a description is given of the function of the occupant protection system 1 according to the embodiment.

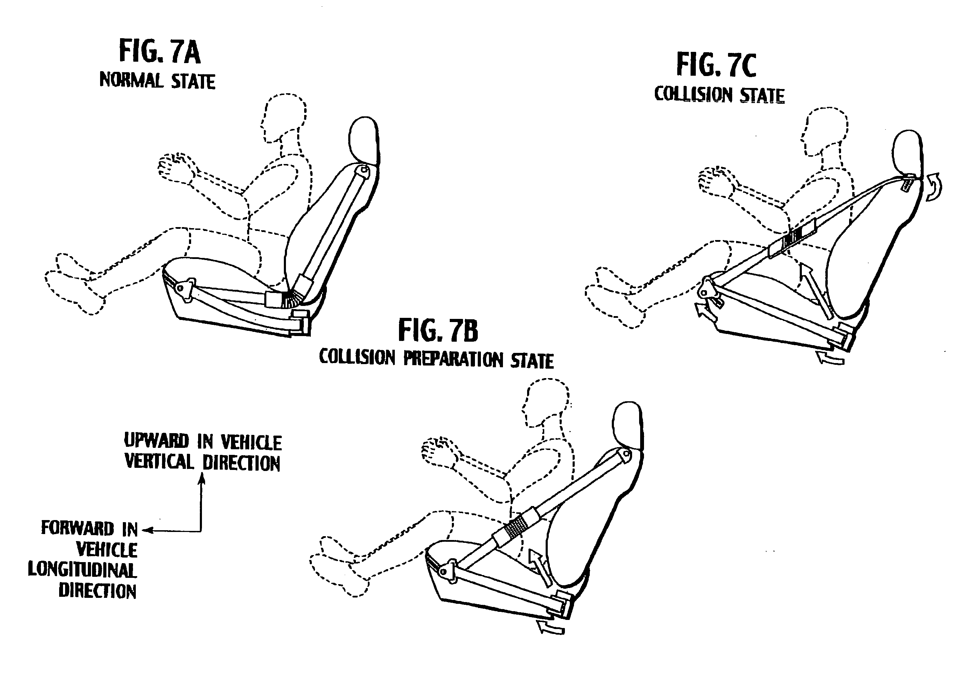

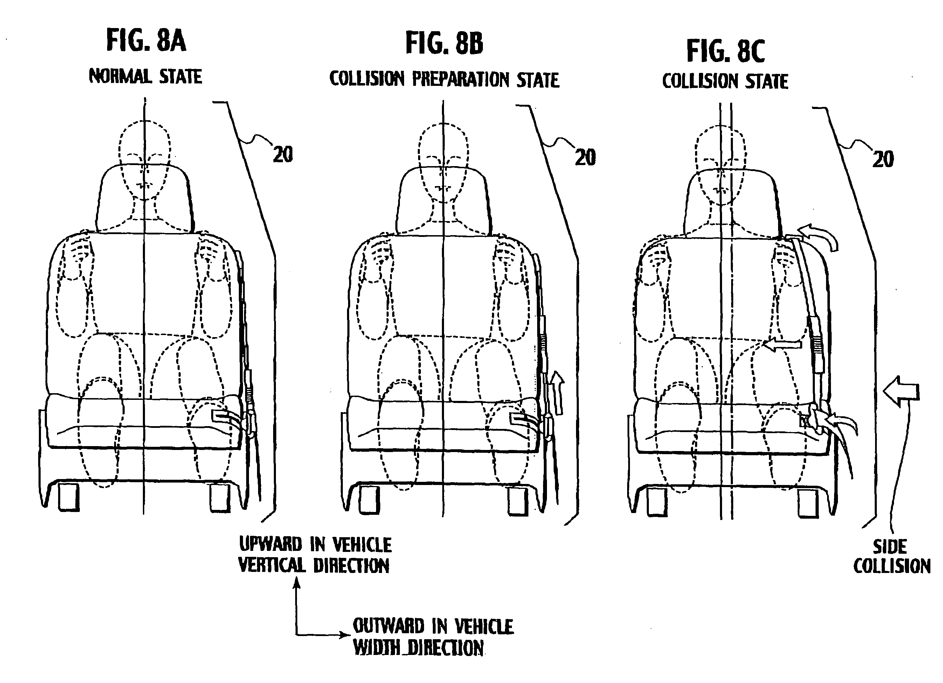

FIGS. 7A to 7C and FIGS. 8A to 8C are views showing states of the occupant protection system 1 before and after the activation while the occupant is sitting on the seat. FIGS. 7A to 7C show side views of the occupant protection system 1, and FIGS. 8A to 8C show front views thereof. In FIGS. 7A to 7C, the belt return elastic body 10 is omitted.

As shown in FIGS. 7A and 8A, before side collision occurs, the occupant protection system 1 is in the normal state where the belt cover 9 is located at the normal position, and the occupant protection system 1 is accommodated without affecting movement of the occupant, especially the occupant getting on and off.

When the possibility of side collision is increased and the level thereof becomes the level L1 or L2, as shown in FIGS. 7B and 8B, the retractor 8 winds the belt 5, and the belt cover 9 moves close to the elbow of the occupant. The occupant protection system 1 is thus brought into the collision preparation state. At this time, when the level of the possibility of side collision is the level L1, the belt 5 is wound at low speed for the predetermined period of time. When the level of the possibility of side collision is the level L2, the belt 5 is wound at high speed for the predetermined period of time.

When the possibility of side collision is eliminated, the occupant protection system 1 brought into the collision preparation state is reversibly returned to the normal state.

Furthermore, when side collision occurs in the collision preparation state, as shown in FIGS. 7C and 8C, the retractor 8 activates the tensioner function and locks the belt 5 into the restraint state. Moreover, the shoulder and through anchor rails 3 and 6 retract the shoulder and through anchors 4 and 7 toward the inside of the vehicle, respectively, to bring the occupant protection system 1 into the collision state where the occupant is restrained toward the inside of the vehicle.

As described above, with the occupant protection system 1 according to the embodiment, the occupant protection system 1 can be set to the collision preparation state in case of side collision and quickly brought into the collision state. When side collision occurs, the occupant protection system I can be quickly brought into the collision state. Moreover, when side collision occurs, the belt 5 and the like can restrain the occupant toward the inside of the vehicle, and the belt 5, which is composed of a flexible linear member, and the belt cover 9, which includes elasticity, can absorb shock given to the occupant. It is therefore possible to reduce the collision energy generated between the occupant and the door and the like when side collision occurs and increase the occupant restraint force in the lateral direction of the vehicle.

According to the occupant protection system 1, it is possible to improve the performance in protecting the occupant from side collision of the vehicle.

### (Application Example)

In this embodiment, the configuration of the belt return elastic body 10 is not limited to that of the aforementioned embodiment as long as the belt return elastic body 10 includes elastic properties and can secure a predetermined stroke and may be another configuration.

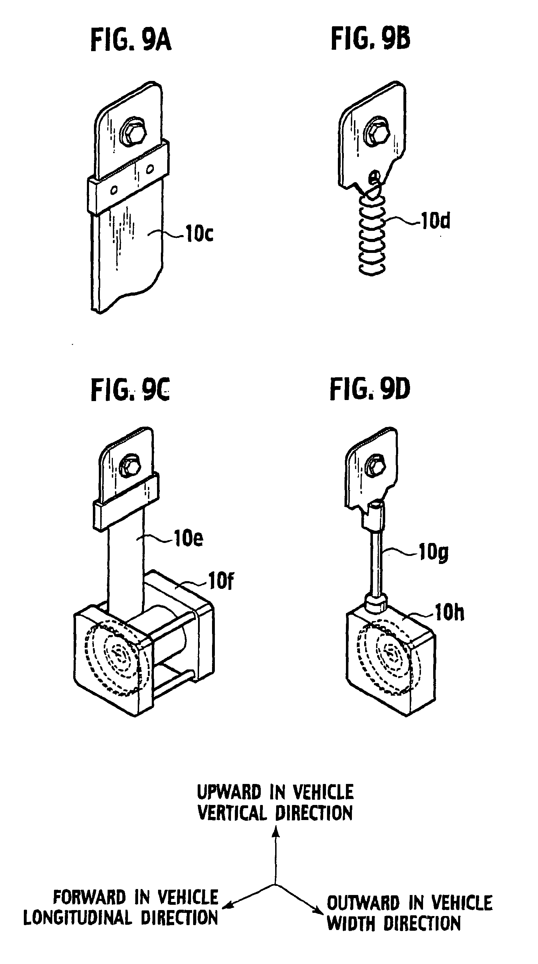

FIGS. 9A to 9D show other configuration examples of the belt return elastic body 10. FIGS. 9A and 9B show configuration examples using a rubber body 10c and a spring 10d as the belt return elastic body 10, respectively. Even if the belt return elastic body 10 itself does not include the elastic properties, the belt return elastic body 10 can be implemented by a combination of a belt or a wire which is a non-elastic body and a retractor which is elastically operated by a motor, a spring, or the like to wind the same. FIGS. 9C and 9D show configuration examples of the belt return elastic body 10 which are composed of a combination of a belt 10e as the non-elastic body and a retractor 10f and a combination of a wire 10g as the non-elastic body and a retractor 10h, respectively. When the belt return elastic body 10 is implemented with the combination of the belt 10e or wire 10g as the non-elastic body and the retractor 10f or 10h, the belt 10e and wire 10g can be wound without being loose, and it is possible to facilitate layout of the members and make a more sophisticated winding control.

Furthermore, the belt return elastic body 10 of this embodiment can include an airbag module to protect a hip of the occupant when the belt return elastic body 10 is operated.

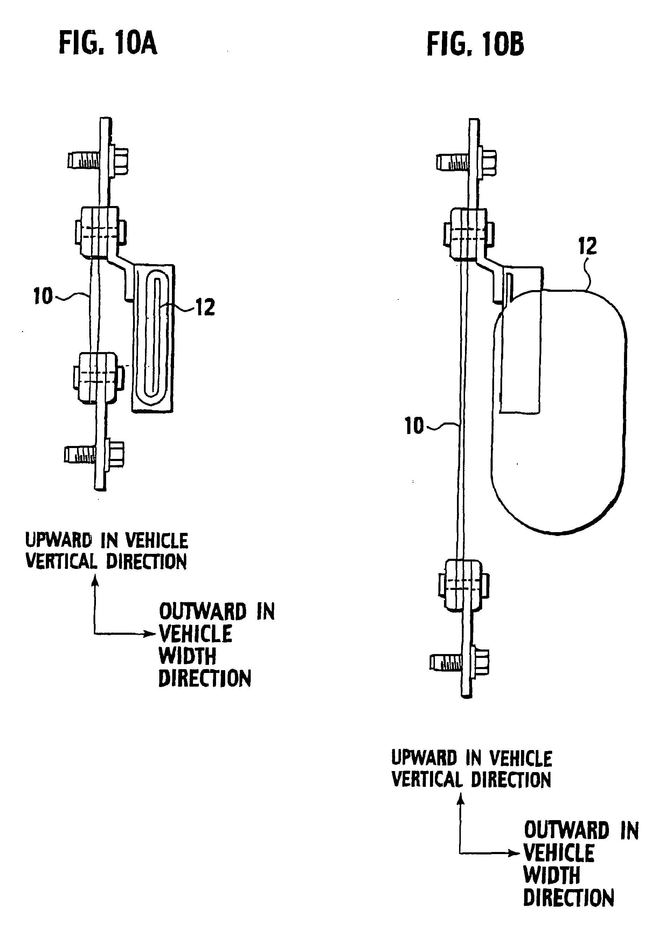

FIGS. 10A and 10B show a configuration example of an airbag module 12, which protects the occupant's hip. FIG. 10A shows a state where the airbag is accommodated, and FIG. 10B shows a state where the airbag has deployed. As shown in FIG 10A, the airbag module 12 is placed at the joint of the belt cover 9 and the belt return elastic body 10. When the occupant protection system 1 is brought into the collision preparation state, the airbag module is therefore located near the occupant's hip. Herein, when the airbag module 12 interferes with the belt return elastic body 10, the tension of the belt 5 is affected at the function, Accordingly, the airbag module 12 is placed outside the belt 5 with a predetermined offset.

In order to configure the deploying airbag to be sandwiched between the occupant's hip and the door trim, as shown in FIG. 10B, the airbag is set so as to deploy downward and outward in the vehicle. The airbag module 12 is fixed only with an upper end thereof and cantilevered. The airbag module 12 provided in such a manner can absorb the collision energy generated by collision of the occupant's hip and the door or the like when side collision occurs.

In the aforementioned embodiment, the belt 5 constitutes the restraint member, the shoulder anchor rail 3, shoulder anchor 4, through anchor rail 6, through anchor 7, retractor 8, belt cover 9, and belt return elastic body 10 constitute a switching apparatus. The shoulder anchor rail 3, actuator 3a, through anchor rail 6, and actuator 6a constitute a transfer apparatus, and the shoulder and through anchors 4 and 7 constitute first and second anchors, respectively. The belt cover 9 and belt return elastic body 10 constitute an accommodating apparatus, and the belt return elastic body 10 constitutes a first retracting apparatus. The side collision sensor unit 11 constitutes a collision prediction apparatus, and the shoulder and through anchor rails 3 and 7 constitute first and second anchor rails, respectively. The actuators 3a and 6a constitute first and second actuators, respectively.

### (Effect of First Embodiment)

(1) When the possibility of side collision is increased, the switching apparatus brings the restraint member into the collision preparation state where the restraint member is moved to between the door and the shoulder and thigh of the occupant who is sitting in a driving position. Accordingly, when collision occurs thereafter, the occupant protection system 1 can be quickly brought into the collision state, thus increasing the initial restraint performance at side collision. Moreover, the collision energy of the side collision can be absorbed by the restraint member. Furthermore, the region defined by connecting the shoulder, thigh, and hip of the sitting occupant, which has not hitherto been protected, can be protected from side collision at the position of the side face of the seat. In other words, the performance in protecting the occupant from side collision of the vehicle can be improved.
(2) At side collision, the transfer apparatus retracts the restraint member toward the inside of the vehicle to support the occupant at his/her shoulder and thigh and move the occupant toward the inside of the vehicle. The possibility that the occupant and the door or the like are brought into contact can be therefore lowered. Even if the occupant is brought into contact with the door or the like, relative speed thereof can be reduced, and accordingly the collision energy can be reduced.
(3) When side collision of the vehicle occurs, the restraint member restrains the occupant toward the inside of the vehicle, and the occupant can be prevented from striking the door or the like. Even if the occupant strikes the door or the like, shock thereof can be reduced. Moreover, the occupant can be prevented from being thrown toward the side of the vehicle when side collision of the vehicle occurs.
(4) Since the restraint member is a flexible linear member, the restraint member is lightweight and easily moved. Accordingly, the restraint member can quickly perform the action of switching to the collision preparation state, collision state, or the like. Moreover, when the restraint member is a belt, a certain contact area can be ensured between the occupant and the restraint member since the belt itself has a certain width (area), and the restraint member can restrain the occupant with the collision energy distributed.
(5) The restraint member is coupled to the frame of the seat (the seat back 2a and seat cushion 2b) through the first and second anchors. Accordingly, load to restrain the occupant at side collision can be distributed and supported, and the region defined by connecting the occupant's shoulder, thigh, and hip can be effectively protected. Moreover, the restraint member is wound by the retractor into the collision preparation state and is accommodated by the accommodating apparatus into the normal state. Accordingly, the occupant protection system can be structured with the style of the seat including the restraint member and switching apparatus on the outside part thereof. Moreover, the cover through which the restraint member is inserted is retracted to the normal position by the first retracting apparatus. Accordingly, the function of accommodating the restraint member along the outside part of the seat so as not to affect the occupant getting on and off can be implemented with a simple structure.
(6) The cover includes the accordion structure in the longitudinally center thereof. Accordingly, even when the seat is reclined, the cover can flexibly follow the seat. Moreover, the cover can be structured so as not to prevent the tension of the restraint member from increasing when the restraint member comes into the collision preparation state or collision state.
(7) The first retracting apparatus is composed of an elastic body. Accordingly, the restraint member can be stably advanced at a maximum distance by which the elastic body is elongated. Moreover, the restraint member can be returned to the normal position by being retracted with the elastic force of the elastic body.
(8) The first retracting apparatus is composed of the linear member coupled to the cover and the retractor winding the same. Accordingly, the restraint member can be wound without being loose, thus facilitating layout of the members and making a more sophisticated control.
(9) Since the collision prediction apparatus is provided, the possibility of side collision can be detected, and the occupant protection system can be automatically changed into the collision preparation state.
(10) The restraint member can be brought into the collision preparation state at a speed according to the level of the possibility of side collision detected by the collision prediction apparatus. It is therefore possible to properly prepare for side collision according to the possibility of side collision.
(11) The tensioner function is activated when side collision occurs, thus increasing the occupant restraint force at the collision.
(12) The first and second anchors provided for the seat back and seat cushion are retracted by the first and second actuators, respectively. Accordingly, it is possible to effectively restrain the occupant at his/her shoulder and thigh and force the occupant to move toward the inside of the vehicle with the restraint member having flexibility.
(13) When being actuators activated by explosive detonation, the first and second actuators can be operated within a very short time.
(14) When being actuators activated by a motor, the first and second actuators can be reversibly operated. Accordingly, the first and second actuators can be operated in advance before collision occurs, thus improving the performance in initially restraining the occupant.

### (Second Embodiment)

### (Configuration)

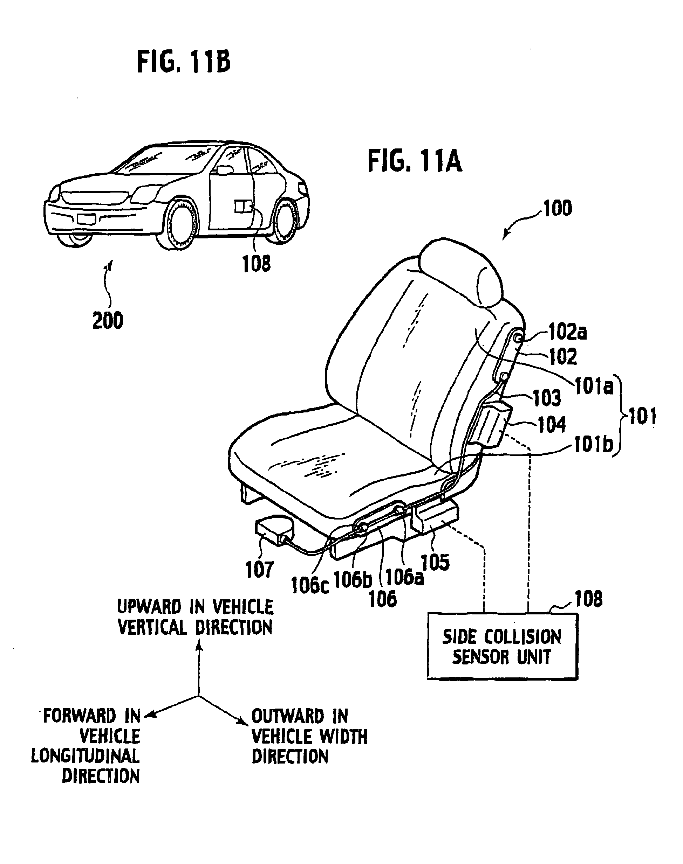

Next, a description is given of a second embodiment of the present invention. FIGS. 11A and 11B show a configuration of an occupant protection system 100 according to this embodiment. The occupant protection system 100 of the second embodiment is provided for side part (outside part) of the seat 101, on which the occupant sits, in a side of the vehicle. The occupant protection system 100 includes a shoulder anchor 102, a wire 103, an airbag unit 104, an airbag unit 105, a through anchor 106, a retractor 107, and a side collision sensor unit 108. The shoulder anchor 102 is composed of a long plate member. An end of the shoulder anchor 102 is rotatably supported at a shoulder of a seat back 101a in the outside part of the seat 101, and the other end thereof is coupled to the wire 103. An end of the wire 103 is coupled to the shoulder anchor 102, and the other end is wound on the retractor 107. The wire 103 is inserted through wire holders 106a and 106b of the through anchor 106, The airbag unit 104 has an edge through which the wire 103 is inserted. The airbag unit 104 accommodates a substantially rectangular airbag 104a later described and is provided on a side face of the seat back 101a. The airbag unit 105 has a similar configuration to the airbag unit 104 and is provided on a side face of a seat cushion 101b. The through anchor 106 is composed of a long plate member similar to the shoulder anchor 102. An end of the through anchor 106 is rotatably supported on front end of the seat cushion 101b in the outside part of the seat 101. The through anchor 106 includes the wire holders 106a and 106b, through which the wire 103 is inserted, at both ends. The retractor 107 winds an end of the wire 103 inserted through the wire holders 106a and 106b of the through anchor 106, the end being different from the end coupled to the shoulder anchor 102.

Among these components, the shoulder anchor 102 is rotatably supported on the shoulder of the side face of the seat back 101a at an anchor point 102a in upper end and is coupled to the wire 103 in lower end. When the retractor 107 retracts the wire 103 to increase the tension of the wire 103, the shoulder anchor 102 rotates around the anchor point 102a so that the lower end is directed toward the anchor point 106c of the through anchor 106. The shoulder anchor 102 is provided with an elastic material, such as rubber and a cushion, in a face on the occupant's side and serves as a pad absorbing shock to the occupant. Even with the wire 103 having a smaller contact area when coming into contact with the occupant than that of a belt or the like, the function of the shoulder anchor 102 as the pad can distribute the force applied to the occupant.

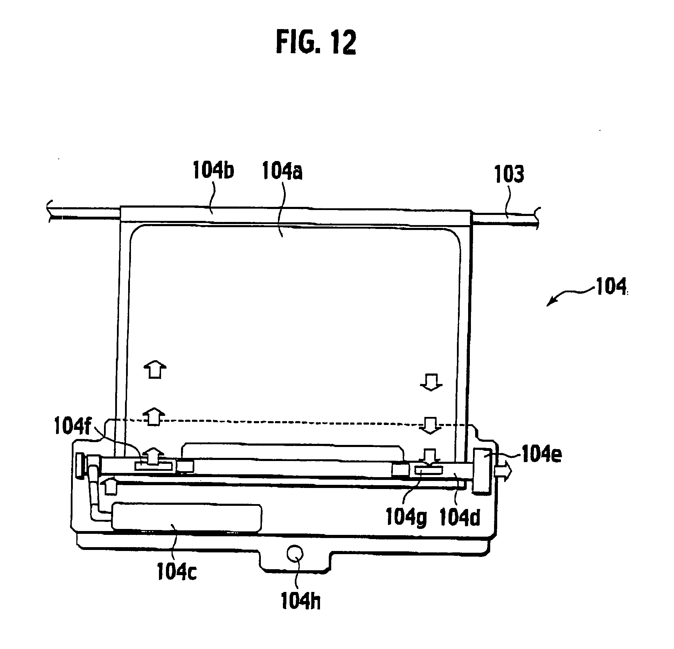

The airbag unit 104 has a configuration shown in FIG. 12 and includes an airbag 104a, an airbag reactive force cloth 104b, an airbag inflator 104c, an airbag winding shaft 104d, a winding drive unit 104e, an inlet 104f, an outlet 104g, and an attachment point 104h. The airbag 104a is filled with gas to deploy at collision. The airbag reactive force cloth 104b forms a cylindrical portion at an edge of the airbag 104a, and the wire 103 is inserted through the cylindrical portion. The airbag inflator 104c supplies gas through the inlet 104f of the airbag winding shaft 104d when the airbag 104a deploys. The airbag winding shaft 104d serves as a shaft when the airbag 104a is wound and accommodated. The winding drive unit 104e generates a drive force when winding the airbag 104a. The inlet 104f is formed in the airbag winding shaft 104d and transmits the gas supplied from the inflator 104c into the airbag 104a. The outlet 104g is formed in the airbag winding shaft 104d and allows gas inside the airbag 104a to be discharged. The airbag unit 104 is connected to the seat back 101a of the seat 101 through the attachment point 104h.

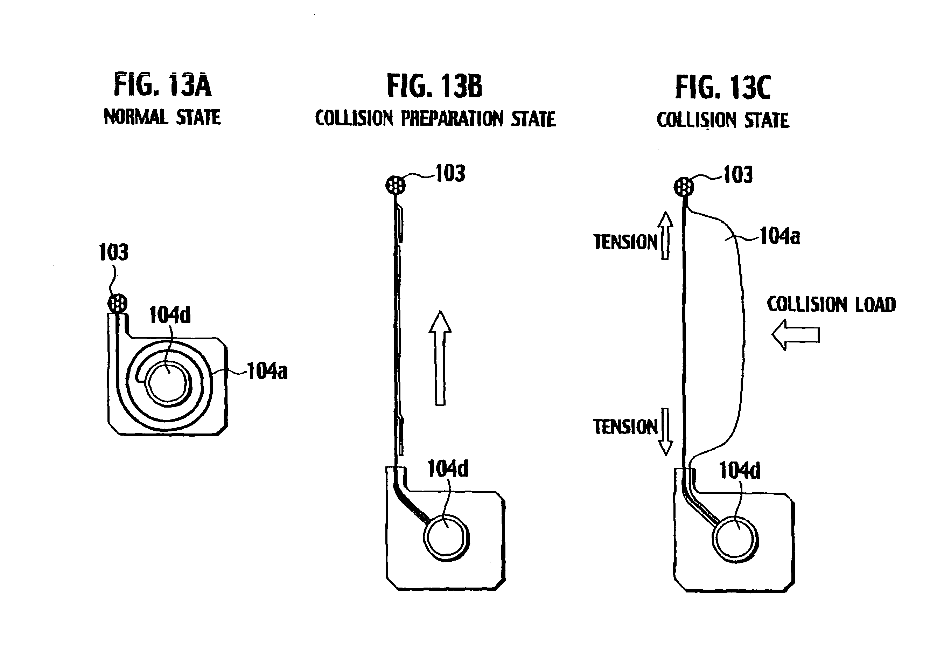

With such a configuration, in the normal state (the state where there is no possibility of side collision and side collision has not occurred), as shown in FIG. 13A, the airbag unit 104 is wound on the airbag winding shaft 104d, and the wire 103 is retracted to the airbag unit 104.

In the collision preparation state (the state where the possibility of side collision is increased), as shown in FIG. 13B, the wire 103 is wound on the retractor 107, and the airbag 104a is pulled out by the increased tension of the wire 103. At this time, the airbag unit 104 rotates around the attachment point 104h according to the movement of the wire 103.

Furthermore, in the collision state (the state where collision is detected), as shown in FIG. 13C, the airbag unit 104 is activated, and the airbag 104a is deployed.

In the state of FIG. 13B, when the possibility of side collision is eliminated, the occupant protection system 100 reversibly comes into the normal state, and the winding drive unit 104 retracts the airbag 104a to again wind the airbag 104a on the airbag winding shaft 104d. The wire 103 is thus retracted to the airbag unit 104. The airbag unit 105 has the same configuration as that of the aforementioned airbag unit 104, and the description thereof is omitted.

As shown in FIG. 11A, the through anchor 106 is supported on the front end of the side face of the seat cushion 101b at the anchor point 106c of the front end. The through anchor 106 is provided with the wire holders 106a and 106b, which allow the wire 103 to be inserted therethrough and supports the same, at the rear and front ends, respectively. When the retractor 107 retracts the wire 103 to increase the tension of the wire 103, the through anchor 106 rotates around the anchor point 106c so that the rear end is directed toward the anchor point 102a of the shoulder anchor 102. Similar to the shoulder anchor 102, the through anchor 106 is provided with an elastic material, such as rubber and a cushion, on a face on the occupant's side and serves as a pad absorbing shock given to the occupant. Accordingly, even when the wire 103 has a small contact area with the occupant, the force applied to the occupant can be distributed by the function of the through anchor 106 as the pad.

Herein, as shown in FIG. 11B, similar to the occupant protection system 1 of the first embodiment, the occupant protection system 100 includes the side collision sensor unit 108 in a side face of a vehicle 200. The configuration of the side collision sensor unit 108 differs from that of the side collision sensor unit 11 of the first embodiment in the process of the step S 102 among the processes executed by the side collision sensor unit 11 of the first embodiment. Specifically, in the step S102, the tensioner function is activated, and the shoulder anchor 4 and through anchor 7 are retracted. However, the side collision sensor unit 108 of this embodiment activates the tensioner function and activates the airbag unit 104 to deploy the airbag 104a. The other processes are the same as those of the first embodiment.

### (Action)

Next, a description is given of the action of the occupant protection system 100.

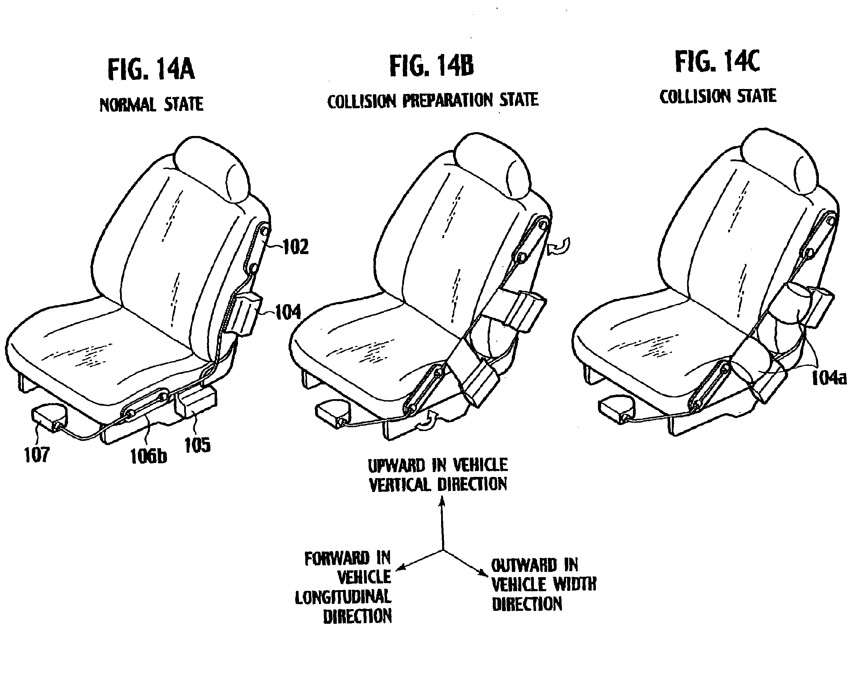

FIGS. 14A to 14C show states of the occupant protection system 100 before and after collision. In the occupant protection system 100 before collision, as shown in FIG. 14A, the shoulder anchor 102 is rotatably supported on the outside part of the side face of the seat back 101 a, and the through anchor 106 is rotatably supported on the front end of the side face of the seat cushion 101b. Moreover, the retractor 107 winds the wire 103 with tension enough to maintain the airbag wound by the airbag units 104 and 105 (the normal state of the occupant protection system 100).

When the possibility of side collision is increased to the level L1 or L2, as shown in FIG. 14B, the retractor 107 winds the wire 103 to draw the airbags 104a and 105a out of the airbag units 104 and 105, respectively, and protrude the same maintained to be deflated (the collision preparation state of the occupant protection system 100).

When the possibility of side collision is avoided thereafter, the retractor 107 releases the retracted wire 103, and the airbag units 104 and 105 rewind the airbags 104a and 105a, respectively. The occupant protection system 100 thus returns to the normal state.

On the other hand, when side collision occurs, as shown in FIG. 14C, the airbag units 104 and 105 deploy airbags to protect the occupant from shock of the side collision (the collision state of the occupant protection system 100).

### (Function)

When the possibility of side collision is increased, in the occupant protection system 100 according to the embodiment, the retractor 107 winds the wire 103. The tension of the wire 103 is therefore increased, and the shoulder and through anchors 102 and 106 rotate and protrude to the side of the occupant. Furthermore, the airbag 104a drawn by the wire 103 is protruded from the airbag units 104 and 105, respectively. When side collision occurs, the airbag deploys.

As described above, the shoulder anchor 102, through anchor 106, and airbags protect the occupant from shock of side collision in conjunction with the wire 3. Accordingly, the contact area between these members and the occupant is increased, the force applied to the occupant at collision can be distributed.

Moreover, upon detection of side collision of the vehicle, the airbag deploys and absorbs shock generated between the occupant and the door, and the occupant protection system 100 can be quickly brought into the collision state from the collision preparation state.

In the above embodiment, the wire 103 constitutes the restraint member, and the shoulder anchor 102, through anchor 106, retractor 107, and airbag units 104 and 105 constitute the switching apparatus. The airbag units 104 and 105 constitute the accommodating apparatus. Each of the airbags 104a and 105a constitutes the coupling member, and each of the airbag units 104 and 105 constitutes a second retracting member. Furthermore, the side collision sensor unit 108 constitutes the collision prediction apparatus. The shoulder and through anchors 102 and 106 constitute the first and second anchors, respectively.

### (Effect of Second Embodiment)

(1) Each of the first and second anchors is composed of the long plate member. Accordingly, even when the restraint member is a wire member having a smaller contact area with the occupant than a belt or the like, the contact area between the restraint member and the occupant at collision can be increased.
(2) The band-shaped coupling members are composed of the airbags. Accordingly, the airbags deploy and absorb the collision energy at the contact positions in the occupant's shoulder, hip, and thigh.
(3) The first and second anchors are provided with the elastic members in the faces on the occupant's side. Accordingly, collision energy at side collision can be absorbed.

In the above description of the first and second embodiments, the restraint member is provided on the side face of the seat. However, as long as the restraint member has a structure to be positioned in the side face of the seat and restrain the occupant at side collision, it is possible to implement a similar effect by, for example, laying the belt 5 or the like between a ceiling and a floor inside the vehicle. Moreover, the member restraining the occupant can be a member other than the belt or wire, for example, such as a long plate member, a mesh member, or a chain member.

In the first and second embodiments, the shoulder anchor holds an end of the restraint member (the belt or wire), and the restraint member is inserted through the through anchor. However, it may be configured so that the through anchor holds an end of the restraint member which is inserted through the shoulder anchor.

The second embodiment is explained taking as an example the configuration which does not include a function to retract the shoulder and through anchors 102 and 106 toward the inside of the vehicle to restrain the occupant when side collision occurs. However, similar to the first embodiment, the second embodiment can be configured to retract the shoulder and through anchors 102 and 106 toward the inside of the vehicle to restrain the occupant when side collision occurs.

The entire content of a Japanese Patent Application No. P2005-187928 with a filing date of June 28, 2005 is herein incorporated by reference.

Although the invention has been described above by reference to certain embodiments of the invention, the invention is not limited to the embodiments described above and modifications may become apparent to these skilled in the art, in light of the teachings herein. The scope of the invention is defined with reference to the following claims.

## Claims

1. An occupant protection system for protecting an occupant from side collision of a vehicle (20, 200), comprising:
a restraint member (5, 103) provided between the occupant and a side face of the vehicle (20, 200), and restraining a shoulder and a thigh of the occupant toward the inside of the vehicle (20, 200) when the collision to the side face occurs; and
a switching apparatus reversibly switching between a normal state in which the restraint member (5, 103) is accommodated at a place where the restraint member (5, 103) does not affect the occupant getting on and off the vehicle (20, 200) and an collision preparation state where the restraint member (5, 103) is positioned between the side face of the vehicle (20, 200) and the shoulder and the thigh of the occupant.

2. An occupant protection system according to claim 1, further comprising:
a transfer apparatus moving the occupant inward in a vehicle (20, 200) width direction when the side collision occurs.

3. An occupant protection system according to claim 1,
wherein the restraint member (5, 103) is a flexible linear member.

4. An occupant protection system according to claim 1,
wherein the restraint member (5, 103) is any one of a belt member and a wire member.

5. An occupant protection system according to claim 1,
wherein the switching apparatus comprises:
a first anchor (4, 102) provided at a shoulder of a seat back (2a, 101a) of the seat (2, 101) on a seat side face adjacent to the side face of the vehicle (20, 200);
a second anchor (7, 106) provided at a front end of a seat cushion (2b, 101b) of the seat (2, 101), wherein one of the first and second anchors (4, 102, 7, 106) supports an end of the restraint member (5, 103) and the other one of the first and second anchors (4, 102, 7, 106) allows the restraint member (5, 103) to be inserted therethrough;
a retractor (8, 107) winding the other end of the restraint member (5, 103); and
an accommodating apparatus holding a predetermined place of the restraint member (5, 103) between the first and second anchors (4, 102, 7, 106), and causing the restraint member (5, 103) to be accommodated along the seat side face.

6. An occupant protection system according to claim 5,
wherein the restraint member (5) is composed of a belt member, and
the accommodating apparatus comprises:
a cover (9) allowing the restraint member (5) to be inserted therethrough and being bendable along the seat side face; and
a first retracting apparatus (10) retracting the cover (9) close to a joint portion of the seat back (2a) and the seat cushion (2b).

7. An occupant protection system according to claim 6,
wherein the cover (9) includes an accordion structure (9a), and bends at the accordion structure (9a) when being retracted by the first retracting apparatus (10).

8. An occupant protection system according to claim 6,
wherein the first retracting apparatus (10) is composed of an elastic body (10c, 10d) retracting the cover (9) with a predetermined elastic force.

9. An occupant protection system according to claim 6,
wherein the first retracting apparatus (10) is composed of a liner member (10e, 10g) coupled with the cover (9) and a retractor (10f, 10h) winding the linear member (10e, 10g).

10. An occupant protection system according to claim 6, further comprising:
an airbag module (12) connected to the cover (9) and protecting a hip of the occupant.

11. An occupant protection system according to claim 5,
wherein the restraint member (103) is composed of a wire member,
the first and second anchors (102, 106) are composed of a long plate member, the first and second anchors (102, 106) are rotatably supported on the seat back (101a) and seat cushion (101b), and the other one of the first and second anchors (102, 106) is provided with a wire holder (106a, 106b) allowing the restraint member (103) to be inserted therethrough, and
the accommodating apparatus includes: a band-shaped coupling member (104a, 105a) holding the predetermined place of the wire member; and a second retracting apparatus (104, 105) retracting the coupling member (104a, 105a) to the seat side face.

12. An occupant protection system according to claim 11,
wherein the coupling member (104a, 105a) is composed of an airbag, and the airbag deploys when side collision occurs.

13. An occupant protection system according to claim 11,
wherein each of the first and second anchors (102, 106) includes an elastic member in a face of the long plate member on the occupant's side.

14. An occupant protection system according to claim 1, further comprising:
an collision prediction apparatus (11, 108) detecting possibility of the side collision of the vehicle (20, 200),
wherein when the collision prediction apparatus (11, 108) detects the possibility of the side collision, the restraint member (5, 103) changes from the normal state to the collision preparation state.

15. An occupant protection system according to claim 14,
wherein speed at which the restraint member (5, 103) changes from the normal state to the collision preparation state is varied according to a level of the possibility of side collision detected by the collision prediction apparatus (11, 108).

16. An occupant protection system according to claim 1,
wherein tension of the restraint member (5, 103) brought into the collision preparation state is increased when the side collision occurs.

17. An occupant protection system according to claim 5, further comprising:
a first anchor rail (3) slidably holding the first anchor (4);
a first actuator (3a) retracting the first anchor (4) along the first anchor rail (3) in a direction away from the side face of the vehicle (20);
a second anchor rail (6) slidably holding the second anchor (7); and
a second actuator (6a) retracting the second anchor (7) along the second anchor rail (6) in the direction away from the side face of the vehicle (20);
wherein when the side collision occurs, the first and second actuators (3a, 6a) retract the first and second anchors (4, 7), respectively, to move the occupant in the direction away from the side face of the vehicle (20).

18. An occupant protection system according to claim 17,
wherein the first and second actuators (3a, 6a) perform the retraction with explosive detonation.

19. An occupant protection system according to claim 17,
wherein the first and second actuators (3a, 6a) perform retraction with a motor.

20. A vehicle, comprising;
an occupant protection system (1, 100) according to claim 1.

21. An occupant protection method for protecting an occupant from side collision of a vehicle (20, 200), comprising:
providing a restraint member (5, 103) between the occupant and a side face of the vehicle (20, 200), the restraint member (5, 103) restraining a shoulder and a thigh of the occupant toward the inside of the vehicle (20, 200) when the collision to the side face occurs; and
reversibly switching between a normal state in which the restraint member (5, 103) is accommodated at a place where the restraint member (5, 103) does not affect the occupant getting on and off the vehicle (20, 200) and an collision preparation state where the restraint member (5, 103) is positioned between the side face of the vehicle (20, 200) and the shoulder and the thigh of the occupant.
